(19) Europäisches Patentamt
European Patent Office
Office européen des brevets

(11) **EP 2 562 558 B1**

(12) **EUROPEAN PATENT SPECIFICATION**

(45) Date of publication and mention
of the grant of the patent:
**09.07.2014 Bulletin 2014/28**

(51) Int Cl.:
*G01S 13/88* (2006.01)     *G01S 13/89* (2006.01)
*G01S 13/93* (2006.01)     *G01S 13/95* (2006.01)
*G01S 7/41* (2006.01)

(21) Application number: **12425141.4**

(22) Date of filing: **24.08.2012**

(54) **Process for the localization of targets drifting in the sea**

Verfahren zur Lokalisierung von im Meer treibenden Zielen

Procédé de localisation de cibles en dérive dans la mer

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2011 IT RM20110446**

(43) Date of publication of application:
**27.02.2013 Bulletin 2013/09**

(73) Proprietor: **Remocean S.p.A.**
**80122 Napoli (IT)**

(72) Inventor: **Serafino, Francesco**
**80122 Napoli (IT)**

(74) Representative: **Tiburzi, Andrea et al**
**Barzanò & Zanardo Roma S.p.A.**
**Via Piemonte 26**
**00187 Roma (IT)**

(56) References cited:
**US-A- 4 172 255**

• **FRANCESCO SERAFINO ET AL: "A Novel Strategy for the Surface Current Determination From Marine X-Band Radar Data", IEEE GEOSCIENCE AND REMOTE SENSING LETTERS, IEEE SERVICE CENTER, NEW YORK, NY, US, vol. 7, no. 2, 1 April 2010 (2010-04-01), pages 231-235, XP011296761, ISSN: 1545-598X**
• **K. Reichert, K. Hessner, J. C. Nieto Borge, J. Dittmer: "WAMOS II: A RADAR BASED WAVE AND CURRENT MONITORING SYSTEM", , 31 May 1999 (1999-05-31), XP002666137, Retrieved from the Internet: URL:http://www.oceanwaves.org/download/PDF /ISOPE_99.pdf [retrieved on 2011-12-19]**
• **CHRISTIAN M SENET ET AL: "The Near-Surface Current Velocity Determined from Image Sequences of the Sea Surface", IEEE TRANSACTIONS ON GEOSCIENCE AND REMOTE SENSING, IEEE SERVICE CENTER, PISCATAWAY, NJ, US, vol. 39, no. 3, 1 March 2001 (2001-03-01), XP011021714, ISSN: 0196-2892**

**Description**

The present invention relates to a process for the localization of objects, boats, people, etc., from here on referred to generically by the name of the target, drifting in the sea.

In particular, said process allows to localize a target as a function of the displacement of the superficial currents and of the parameters characterizing the sea state, such as direction of the dominant wave and significant wave height.

In the last decade the interest in monitoring the status of the sea, starting from images acquired by means of appropriate radar systems, such as X-band radars, has been growing, since said radar systems offer the possibility to scan the sea surface with a high temporal and spatial resolution (R. Young, W. Rosenthal and F. Ziemer, "Three-dimensional analysis of marine radar images for the determination of ocean wave directionality and surface currents". J. Geophys. Res., vol. 90, 1985, pp. 1049-1059, 1985; F. Ziemer, and W. Rosenthal, "Directional spectra from shipboard navigation radar during LEWEX". Directional Ocean Wave Spectra: Measuring, Modeling, Predicting, and Applying, 1991 R. C. Beal, Ed., The Johns Hopkins University Press, pp. 125-127; J.C. Nieto Borge, R. G.Rodriguez, K. Hessner, I. P.Gonzales, "Inversion of marine radar images for surface wave analysis". J. of Atmospheric and Oceanic technology, vol. 21, pp. 1291-1300, 2004; J.C. Nieto Borge and C. Guedes Soares, "Analysis of directional wave fields using X-Band navigation radar". Coastal Eng., vol. 40, pp. 375-391, 2000; J.C. Nieto Borge, "Analisis de Campos de Oleaje Mediante Radar de Navegacion en Banda X-", Ph.D. Thesis, University of Madrid, 1997; Serafino F., Lugni C., and Soldovieri F. A Novel Strategy for the Surface Current Determination from Marine X-Band Radar Data. IEEE Geoscience and Remote Sensing Letters, 2010, vol. 7, pp. 232-236). The possibility to scan the sea surface in an accurate manner is due to the fact that the backscattered signal (scattering) from the sea is "visible" on the radar images (in a range of some km from the observation platform if certain conditions are verified (J.C. Nieto Borge, "Analisis de Campos de Oleaje Mediante Radar de Navegacion en Banda X-", Ph.D. Thesis, University of Madrid, 1997), in particular if there is a wind of a few meters per second. The backscattered signal from the sea and received by the radar is considered noise, hence the name "clutter", with which it is historically indicated, when the radar is used for the normal purpose of the navigation control. Otherwise, this signal represents the "useful signal" to be processed when the aim is to obtain a space-time image of the sea state. The backscattered signal from the sea is connected to the Bragg resonance with the waves of the surface, called capillary waves or ripples, having wavelengths similar to those of the transmitted electromagnetic waves. In particular, the longer waves of a few tens or hundreds of meters modulate the backscattered signal and thus they become visible in the radar images. More in detail, the effect produced by such modulation is the one that results from the following modulations: hydrodynamic modulation (HM), tilt modulation (TM), and modulation for shadowing (SH)

The hydrodynamic modulation describes the modulation of the energy of waves induced by the interaction with the longer waves.

The modulation by inclination is the modulation due to the variation of the angle between the direction in which the radar radiation is transmitted and the tangent plane (facet) to the surface of the wave (Rungaldier, J.C. Shelton, A.B. Williams, R. Yee, and H.C. Yuen" "X-Band Microwave Backscattering from Ocean Waves. J. Geophys. Res., vol. 100, pp. 2591-2611, 1995; W. J. Plant, and W. C. Keller, "Evidence of Bragg scattering in microwave Doppler spectra of sea return". J. Geophys. Res., 1990, vol. 95, pp. 16299-16310; L. B. Wenzel, "Electromagnetic scattering from the sea at low grazing angles". Surface Waves and Fluxes, G. L. Geernaert and W. J. Plant, Eds., Kluwer Academic, pp. 41-108, 1990).

The shadowing modulation occurs when the higher waves hide the lower waves to the signal transmitted by the radar.

Such phenomenon becomes more evident with increasing height of the radar over the sea surface. This phenomenon produces abrupt changes of the signal received by the radar, by introducing additional components in the spectral density for high values of the wave-number.

The effect due to these modulations is that the radar image is not a direct representation of the sea state and therefore a process for analysing such images is necessary.

Such analysis is performed through the resolution of an inverse problem that, starting from a time series of territorial radar images collected in different instants of time, allows to determine the elevation of the sea surface, i.e. the height of the waves, intended as a function of three variables: two spatial variables, which represent respectively the distance of the area swept by the radar along the X axis and along the Y axis, and the time variable.

A process for the detection, localization and classification of the target is described in Norwegian patent NO 8920624 and is based on the use of a transmitter, installed on an airplane or a boat, for transmitting a signal, a transponder, installed on the object to be localizated, which receives the signal transmitted by the transmitter and re-emits a signal, via an antenna, to a receiver that identifies the position of said object, wherein said receiver is also installed on said aircraft or boat.

A drawback of said process is that for localizing the target it is necessary that a transponder is installed on said target. Therefore, this means to apply a transponder on each object or each passenger who may accidentally fall into the sea, with the consequent costs, besides the loss of time for their application.

A further disadvantage is that the search areas can become very large so that the use of a high number of means for searching the target is required since no indication of the sea state and, consequently, about the direction of displacement of the target is provided.

Another process for the localization of the target drifting in the sea is described in the patent application WO 2004/097 452 and is based on the use of a coherent radar for the detection of a reflector target. The radar transmits a signal and receives the echo reflected from the target. The analysis of the received signal allows to locate the position of the target.

A drawback of said process is that in rough sea conditions or, more generally, in the case of high level of *clutter*, distinguishing the reflected signal from the target than that of *clutter* may be impossibile.

Another drawback is the fact that the coherent radar is not generally installed on boats, unlike the radar nautical.

Furthermore, such localization processes have common drawbacks.

A first drawback is that they are not processes for localization of targets based on an objective measure of data characterizing the sea state.

A second drawback is that for the localization of the target they require the installation of additional electronic devices, such as transponder or coherent radar.

The object of the present invention is to overcome said drawbacks, providing a process for detecting the position of a target drifting in the sea within an area of uncertainty, which process is based on an accurate estimation of the superficial currents and the parameters of the sea state.

It is therefore specific object of the present invention a process for the localization of a target drifting in the sea, comprising the following steps:

A) acquiring a temporal sequence of images of the sea surface through a images acquiring electronic device suitable to acquire continuously images of the sea surface;

B) applying a three-dimensional Fourier transform to said images temporal sequence to obtain a image spectrum $F_1(k_x,k_y,\omega)$, where:

$k$ is the wave-number vector, and $k_x,k_y$ are the components of said wave-number vector, and $\omega$ is the angular frequency;

C) filtering with a high pass filter the image spectrum $F_1(k_x,k_y,\omega)$ to delete the low frequency components present in said image spectrum;

D) estimating a sea superficial current $\overline{U} = (U_x,U_y,)$ and the depth of the sea in relation to the area swept by said images acquiring electronic device;

E) filtering the image spectrum $F_1(k_x,k_y,\omega)$ with a band-pass filter, after its construction as a function of the estimated superficial current and sea depth, so as to obtain a filtered image spectrum $\tilde{F}_1(k_x,k_y,\omega)$ where the unwanted spectrum components induced by the images acquiring electronic device, have been deleted;

F) applying the Modulation Transfer Function $|M(k)|^2$ to the filtered image spectrum $\tilde{F}_1(k_x,k_y,\omega)$ to obtain the sea spectrum $F_W(k_x,k_y,\omega)$:

$$F_W\left(k_x,k_y,\omega\right)=\frac{\tilde{F}_I\left(k_x,k_y,\omega\right)}{\left|M(k)\right|^2}$$

where:

$|M(k)|^2 = k^\beta$, and
$\beta$ is a coefficient which is determined in an empiric manner;

G) starting from said sea spectrum $F_W(k_x,k_y,\omega)$, estimating the following parameters of the sea state, namely significant wave height $H_s$, period $T_p$, wavelength $\lambda_p$ and direction $\theta_p$ of the dominant waves;

H) estimating a waves drift $\overline{U}_L = (U_{Lx},U_{Ly},)$ associated to the presence of waves starting from sea parameters, the direction of said waves drift being set from the direction $\theta_p$ of the dominant waves, and the intensity being:

$$u_L = ga^2k^2\cosh[2k(h+z)]/\omega\sinh(2kh)$$

where:

$g$ is the acceleration of gravity,
$\omega$ is the angular frequency of the dominant waves equal to $2*\pi/T_p$,
$k$ is the wave-number of the dominant waves equal to $2*\pi/\lambda_p$,
$a$ is the amplitude of the wave,
$h$ is the depth of the sea with respect to the undisturbed free surface, and
$z$ is the vertical coordinate (z=0 corresponds to the undisturbed free surface);

I) calculating the total superficial drift $\overline{U}_T = (U_{Tx}, U_{Ty})$, said total superficial drift being the vectorial sum of the estimated superficial current $\overline{U}$ and of the estimated waves drift $\overline{U}_L$ :

$$U_{Tx} = U_x + U_{Lx},$$

$$U_{Ty} = U_y + U_{Ly};$$

L) determining the presumed position $\overline{P}=(P_x, P_y)$ of the target in the sea with respect to a local reference system, i.e. with respect to the position of the images acquiring electronic device:

$$P_x = P_{x0} + U_{Tx} * T,$$

$$P_y = P_{y0} + U_{Ty} * T,$$

where:

$P_{x0}, P_{y0}$ are the coordinates respectively along the X-axis and Y-axis of the point where the target has fallen into the sea or where the wreck occurred, and
$T$ is the intervention time or the time which is passed from the fall of the target into the sea or from wreck;

M) transforming the coordinates $P_x$ e $P_y$ of the presumed position $\overline{P}$ of the target from a local reference system to a geographic global reference system;

N) determining an area of uncertainty within which to search for the target as a function of an error $dU$ on the estimation of the superficial current $\overline{U}$ and an error $dU_L$ on the estimation of the wave drifts $\overline{U}_L$, wherein said area of uncertainty has a shape composed of a semicircle and a semi-ellipse, whose minor axis coincides with the diameter of said semicircle and whose major semi-axis is oriented in the same direction $\theta_p$ and orientation of the dominant waves, the semi-axes being defined by the following formulas:

$$\text{minor semi-axis} = \sqrt{2} * dU * T,$$

$$\text{major semi-axis} = \sqrt{dU^2 + dU_L^2} * T$$

where:

$$dU_L = \sqrt{da^2 + d\lambda_P{}^2 + dT_P{}^2}\,.$$

In particular, said electronic device for acquiring images can be a X-band radar.

With regards to the step H, the amplitude of the wave can be approximated to $H_s/2$.

Advantageously in windy conditions and in the case where the target exposes outside of the sea surface a surface greater than that dipped surface so as to make a resistance to the wind, the wind can generate a drift $\overline{U}_V = (U_{Vx}, U_{Vy},)$, equivalent to a waves superficial current, and the contribution of such drift $\overline{U}_V$ is to be added in calculating the total superficial drift $\overline{U}_T = (U_{Tx}, U_{Ty})$. Therefore, the superficial drif of the step I) can be given by:

$$U_{Tx} = U_x + U_{Lx} + U_{Vx},$$

$$U_{Ty} = U_y + U_{Ly} + U_{Vy}\,.$$

In particular, in windy conditions, the major semi-axis of the semi-ellipse of area of uncertainty extends in the direction of the wind and can be given by:

$$\text{major semi-axis} = \sqrt{dU^2 + dU_L^2 + dU_v^2} * T$$

where:

$dU_v$ is the error on the estimation of the wind intensity.

According to the invention, in case of non-uniform superficial current, in the step D) a vectorial field of superficial currents $\overline{U}_1 = (U_{x1}, U_{y1})$, $\overline{U}_2 = (U_{x2}, U_{y2},)$, $\overline{U}_3 = (U_{x3}, U_{y3},)... \overline{U}_n = (U_{xn}, U_{yn},)$ can be estimated, wherein the components of each superficial current are function of the space, and a superficial currents map is created.

Present invention will be now described, for illustrative, but not limitative purposes, according to an embodiment, making particular reference to the enclosed drawings, wherein:

figure 1 shows a castaway in the sea who has to be localized;
figure 2 shows an inset where the position of the ship and that of the castaway to be localize are visible;

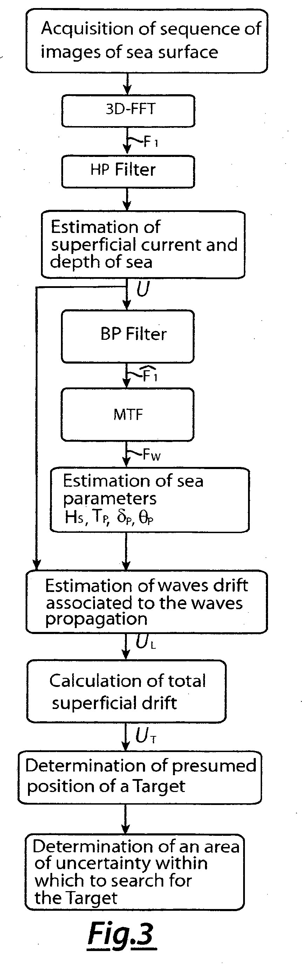

figure 3 is a block diagram of the process for the localization of the castaway drifting in the sea, object of the invention.

With reference to the figures, a process for the localization of a castaway N is shown.

For the localization of the castaway N, a X-band radar is used, generically indicated by R, which is installed on a ship I, and the radius of which allows to sweep an area P depending on the radius of the radar antenna and the characteristics of sea. Such radar R is an active sensor that operates at microwave frequencies.

Said localization process comprises the following steps:

A) acquiring a temporal sequence of images of the sea surface through the X-band radar;
B) applying a three-dimensional Fourier transform to said images temporal sequence to obtain a image spectrum $F_1(k_x, k_y, \omega)$, where
$k$ is the wave-number vector, and $k_x, k_y$ are the components of such wave-number vector, and
$\omega$ is the angular frequency;
C) filtering with a high pass filter the image spectrum $F_1(k_x, k_y, \omega)$ to delete the low frequency components present in said image spectrum;

D) estimating a sea superficial current $\overline{U} = (U_x, U_y)$ and the depth of the sea in relation to the area P swept by the radar R;

E) filtering the image spectrum $F_1(k_x, k_y, \omega)$ with a band-pass filter, after its construction as a function of the estimated superficial current and sea depth, so as to obtain a filtered image spectrum $\tilde{F}_1(k_x, k_y, \omega)$ where the unwanted spectrum components induced by the X-band radar, have been deleted;

F) applying the Modulation Transfer Function, indicated by $|M(k)^2|$, to the filtered image spectrum $\tilde{F}_1(k_x, k_y, \omega)$ to obtain the sea spectrum $F_W(k_x, k_y, \omega)$):

$$F_W\left(k_x, k_y, \omega\right) = \frac{\tilde{F}_I\left(k_x, k_y, \omega\right)}{\left|M(k)\right|^2}$$

where:

$$\left|M(k)\right|^2 = k^\beta,$$

and

$\beta$ is a coefficient which is determined in an empiric manner;

G) starting from said sea spectrum $F_W(k_x, k_y, \omega)$, estimating the following parameters of the sea state, namely significant wave height $H_s$, period $T_p$, wavelength $\lambda_p$ and direction $\theta_p$ of the dominant waves;

H) estimating a waves drift $\overline{U}_L = (U_{Lx}, U_{Ly})$ associated to the presence of waves starting from sea parameters (Advanced Series on Ocean Engineering - Vol. 2, Water wave mechanics for engineers and scientists, R. G. Dean (University of Florida, USA) & Robert A Dalrymple (University of Delaware, USA)), wherein the direction of said waves drift is set from the direction $\theta_p$ of the dominant waves, and the intensity is given by:

$$u_L = ga^2k^2\cosh[2k(h + z)]/\omega\sinh(2kh)$$

where:

$g$ is the acceleration of gravity,
$\omega$ is the angular frequency of the dominant waves equal to $2 * \pi / T_p$,
$k$ is the wave-number of the dominant waves equal to $2 * \pi / \lambda_p$,
$a$ is the amplitude of the wave,
$h$ is the depth of the sea with respect to the undisturbed free surface, and
$z$ is the vertical coordinate ($z = 0$ corresponds to the undisturbed free surface);

I) calculating the total superficial drift $\overline{U}_T = (U_{Tx}, U_{Ty})$, said total superficial drift being the vectorial sum of the estimated superficial current $\overline{U}$ and of the estimated waves drift $\overline{U}_L$ :

$$U_{Tx} = U_x + U_{Lx},$$

$$U_{Ty} = U_y + U_{Ly};$$

L) determining the presumed position $\overline{P} = (P_x, P_y)$ of the castaway N in the sea with respect to a local reference system, i.e. with respect to the position of the radar R:

$$P_x = P_{x0} + U_{Tx} * T,$$

$$P_y = P_{y0} + U_{Ty} * T,$$

where:

$P_{x0}$, $P_{y0}$ are the coordinates respectively along the X-axis and Y-axis of the point where the castaway N has fallen into the sea or where the wreck occurred, and

$T$ is the intervention time or the time which is passed from the fall of the castaway into the sea or from wreck;

M) transforming the coordinates $P_x$ e $P_y$ of the presumed position $\overline{P}$ of the castaway N from a local reference system to a geographic global reference system;

N) determining an area of uncertainty A within which to search for the target N as a function of an error $dU$ on the estimation of the superficial current $\overline{U}$ and an error $dU_L$ on the estimation of the wave drifts $\overline{U}_L$, wherein said area of uncertainty has a shape composed of a semicircle and a semi-ellipse, whose minor axis coincides with the diameter of said semicircle and whose major semi-axis is oriented in the same direction $\theta_p$ and orientation of the dominant waves, the semi-axes being defined by the following formulas:

$$\text{minor semi-axis} = \sqrt{2} * dU * T,$$

$$\text{major semi-axis} = \sqrt{dU^2 + dU_L^2} * T$$

where:

$T$ is the intervention time or the time which is passed from the fall of the castaway into the sea or from wreck,

$dU$ is the error on the estimation of the superficial current $U$,

$dU_L = \sqrt{da^2 + d\lambda_P^2 + dT_P^2}$ is the error on the estimation of the waves drift $U_L$ (RB Abernethy, RP Benedict, R.B Dowdell, 'ASME Measurement Uncertainty', J Fluids Eng, 1985).

With reference to step A), although the temporal sequence of images of the sea surface is acquired by means of an X-band radar, such a sequence of images may be acquired by any electronic device adapted to acquire with continuity images of the sea surface, such as camcorders, satellite radar, without thereby departing from the scope of the invention.

With reference to the step of filtering with a high pass filter the image spectrum $F_1(k_x, k_y, \omega)$ (step C), such step allows to remove the effects due the decay of power of the signal received by the X-band radar R along the direction of the signal transmitted by the radar.

With reference to the step of estimating the superficial currents (step D), an accurate estimation of the sea superficial corrent is a key point of the process for the localization of the castaway N, since an incorrect estimation of said superfical current involves an incorrect implementation of a pass band filter and a wrong filtering of the image spectrum with said filter (step E), as well as an incorrect reconstruction of the sea surface.

With reference to the step of filtering the image spectrum $F_1(k_x, k_y, \omega)$ with the band pass filter (step E), the removal of unwanted components introduced by the radar R allows to extract the components associated with the waves of the sea.

Again with reference to step E, for the implementation of the band-pass filter the following relation is used:

$$\omega = \sqrt{g \mid \vec{k} \mid \tanh(kh_0)} + \vec{k}\vec{U}$$

where:

ω is the angular frequency,
$\overline{k} = (k_x, k_y)$ is the bidimensional wave-number vector,

$\mid \vec{k} \mid = \sqrt{k_x^2 + k_y^2}$ è the modulus of the bi-dimensional wave-number vector,

h is the depth of the sea with respect to the undisturbed free surface,
$\overline{U} = (U_x, U_y)$ is the bi-dimensional superficial corrent vector.

Therefore, in the light of the above, it is important to have an accurate estimation of the superficial current $\overline{U}$.

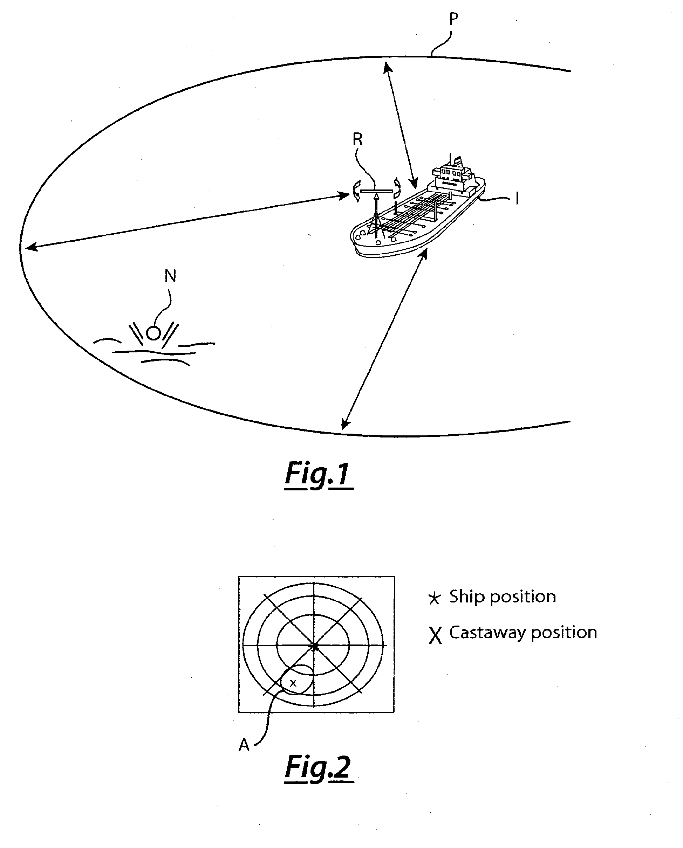

Once obtained the sea spectrum $F_W(kx, ky, \omega)$ (step F) parameters of sea state (step G) are estimated and, together with the estimation of the superficial current (step D), are used to determine the area of uncertainty A within which the castaway N is to be searched, shown in the inset represented in Figure 2.

Such parameters, as previously said, are the significant wave height $H_s$, period $T_p$, wavelength $\lambda_p$ and direction $\theta_p$ of the dominant waves.

With reference to the step H, the wave height a can be approximated to the half of the significant wave height, i.e. equal to $H_s/2$.

In the embodiment being described, the analysis of radar images allows to obtain, in a period of time corresponding to 16 or 32 complete rotations of the radar R, the estimation of the superficial current in a radius of action of the radar antenna ranging from 0.75 nautical mile to 3 nautical mile, depending on the characteristics of the sea. Within the same range the analysis of radar images also provides information on the state of the sea, i.e. on the sea parameters.

With reference to the determination of the area of uncertainty A within which the castaway is to be searched (step N), such area of uncertainty A derives from the fact that the estimation of the superficial current $\overline{U}$ and the estimation of the sea parameters, the inaccuracy of the estimation of the sea parameters influencing the estimation of the waves drift $\overline{U}_L$, are affected by an error due to the noise, which is always present in the data acquired by the radar R, and due to the fact that the resolution of the digitalized images is limited.

Therefore, the extension of such area of uncertainty A depends on the accuracy with which superficial currents and sea parameters are estimated. The higher accuracy of the estimation of the superficial current and the sea parameters, the lower the extent of the area of uncertainty A within which the castaway N must be searched.

According to the invention, with reference to the step D, if the superficial current is not uniform within the area P swept by the radar R, it is expected to estimate a vector field of superficial currents $\overline{U}_1 = (U_{x1}, U_{y1},)$, $\overline{U}_2 = (U_{x2}, U_{y2},)$, $\overline{U}_3 = (U_{x3}, U_{y3},)$,...$\overline{U}_n = (U_{xn}, U_{yn},)$, and generate a map of superficial currents corresponding to said area P swept by the radar R. In this specific case, the components of each superficial current are a function of the space. Thus, the estimation of the vectorial field of said superficial currents, together with the local knowledge of the parameters of the sea state, i.e. the knowledge of the sea parameters in relation to the area P swept by the radar R, allows to determine a non-uniform displacement of the castaway N on the sea surface during the time T and determine the presumed position of the castaway.

Furthermore according to the invention, it is also possible to take into account the wind conditions for determining the total drift $\overline{U}_T$.

In fact, for the displacement of any target on the sea surface, if the emerged surface of said target presents a resistance to the wind, by way of example in the case where the target is a sailing boat, the wind intensity and the wind direction, which are provided by an anemometer, may be taken into account in order to reduce the area of uncertainty. This is given by the fact that superficial drifts and parameters of the sea cause the displacement of the target on the sea surface (so-called "leeway"), together with the intensity and direction of the wind in the cases where the surface of the target exposed to the wind is wide.

The wind generates a drift $\overline{U}_V = (U_{Vx}, UV_y,)$ equivalent to a superficial current $\overline{U}$.

Therefore, the contribution of the drift $\overline{U}_V$ generated by the wind is to be added to that of the superficial current $\overline{U}$ and the waves drift $\overline{U}_L$ for the calculation of the total drift which in this case is given by:

$$U_{Tx} = U_x + U_{Lx} + U_{Vx},$$

$$U_{Ty} = U_y + U_{Ly} + U_{Vy},$$

Consequently also the presumed position $\overline{P}$ of the castaway N changes when the wind is taken into account, and the area of uncertainty A deforms further, stretching in the direction of the wind, which typically coincides with the direction of propagation of the dominant waves. In particular, the major semi-axis of the semi-ellipse of the area of uncertainty A stretches in the direction of the wind and is given by:

$$\text{major semi-axis} = \sqrt{dU^2 + dU_L^2 + dU_V^2} * T$$

wherein:

$dU_V$ is the error on the estimation of the wind intensity.

According to the invention, although the process described above is intended to locate a castaway N drifting, the same process can be used, without modification and with the same advantages, for the localization of further targets drifting, such as a boat or an object.

Advantageously, the process for the localization a target drifting, object of the invention, allows to locate the position of said target in a short time and with high accuracy.

Another advantage is the fact that the process according to the invention becomes a useful tool for the localization of both men and objects accidentally fell into the sea since superficial currents, direction of dominant wave and significant wave height are obtained from the analysis of X-band radar images, unlike wind intensity and wind direction which are parameters that are acquired by means of an anemometer.

A further advantage is that the area of uncertainty provided by said process is determined by the theoretical knowledge of the inaccuracy in the estimation of the parameters of the superficial currents and sea parameters, as well as by the time required to reach the point to be located.

Another advantage is that this process has many applications, especially in the context of maritime safety. In such context, for example, it represents a valid support to the activities that are carried out by the port authorities which search targets drifting into the sea.

The present invention has been described for illustrative, but not limitative purposes with reference to a preferred embodiment, but it well evident that one skilled in the art can introduce modifications to the same without departing from the relevant scope as defined in the enclosed claims.

**Claims**

1.  Process for the localization of a target (N) drifting in the sea, comprising the following steps:

    A) acquiring a temporal sequence of images of the sea surface through a images acquiring electronic device suitable to acquire continuously images of the sea surface;
    B) applying a three-dimensional Fourier transform to said images temporal sequence to obtain a image spectrum $F_1(k_x,k_y,\omega)$, where:

    $k$ is the wave-number vector, and $k_x,k_y$ are the components of said wave-number vector, and
    $\omega$) is the angular frequency;

    C) filtering with a high pass filter the image spectrum $F_1(k_x,k_y,\omega)$ to delete the low frequency components present in said image spectrum;
    D) estimating a sea superficial current $\overline{U} = (U_x,U_y,)$ and the depth of the sea in relation to the area (P) swept by said images acquiring electronic device;

E) filtering the image spectrum $F_1(k_x,k_y,\omega)$ with a band-pass filter, after its construction as a function of the estimated superficial current and sea depth, so as to obtain a filtered image spectrum $\tilde{F}_1(k_x,k_y,\omega)$ where the unwanted spectrum components induced by the images acquiring electronic device, have been deleted;

F) applying the Modulation Transfer Function $|M(k)|^2$ to the filtered image spectrum $\tilde{F}_1(k_x,k_y,\omega)$ to obtain the sea spectrum $F_W(k_x,k_y,\omega)$:

$$F_W\left(k_x,k_y,\omega\right)=\frac{\tilde{F}_I\left(k_x,k_y,\omega\right)}{\left|M\left(k\right)\right|^2}$$

where:

$|M(k)|^2 = k^\beta$, and

$\beta$ is a coefficient which is determined in an empiric manner;

G) starting from said sea spectrum $F_W(k_x,k_y,\omega)$, estimating the following parameters of the sea state, namely significant wave height $H_s$, period $T_p$, wavelength $\lambda_p$ and direction $\theta_p$ of the dominant waves;

H) estimating a waves drift $\overline{U}_L = (U_{Lx},U_{Ly})$ associated to the presence of waves starting from sea parameters, the direction of said waves drift being set from the direction $\theta_p$ of the dominant waves, and the intensity being:

$$u_L = ga^2k^2\cosh\left[2k(h+z)\right]/\omega\sinh\left(2kh\right)$$

where:

$g$ is the acceleration of gravity,

$\omega$ is the angular frequency of the dominant waves equal to $2*\pi/T_p$,

$k$ is the wave-number of the dominant waves equal to $2*\pi/\lambda_p$,

$a$ is the amplitude of the wave,

$h$ is the depth of the sea with respect to the undisturbed free surface, and

$z$ is the vertical coordinate ($z=0$ corresponds to the undisturbed free surface);

I) calculating the total superficial drift $\overline{U}_T = (U_{Tx}, U_{Ty})$, said total superficial drift being the vectorial sum of the estimated superficial current $\overline{U}$ and of the estimated waves drift $\overline{U}_L$:

$$U_{Tx} = U_x + U_{Lx},$$

$$U_{Ty} = U_y + U_{Ly};$$

L) determining the presumed position $\overline{P} = (P_x,P_y)$ of the target (N) in the sea with respect to a local reference system, i.e. with respect to the position of the images acquiring electronic device:

$$P_x = P_{x0} + U_{Tx}*T,$$

$$P_y = P_{y0} + U_{Ty} * T,$$

wherein:

$P_{x0}, P_{y0}$ are the coordinates respectively along the X-axis and Y-axis of the point where the target (N) has fallen into the sea or where the wreck occurred, and
$T$ is the intervention time or the time which is passed from the fall of the Target (N) into the sea or from wreck;

M) transforming the coordinates $P_x$ e $P_y$ of the presumed position $\overline{P}$ of the target (N) from a local reference system to a geographic global reference system;
N) determining an area of uncertainty (A) within which to search for the target (N) as a function of an error $dU$ on the estimation of the superficial current $\overline{U}$ and an error $dU_L$ on the estimation of the wave drifts $\overline{U}_L$, wherein said area of uncertainty has a shape composed of a semicircle and a semi-ellipse, whose minor axis coincides with the diameter of said semicircle and whose major semi-axis is oriented in the same direction $\theta_p$ and orientation of the dominant waves, the semi-axes being defined by the following formulas:

$$\text{minor semi-axis} = \sqrt{2} * dU * T,$$

$$\text{major semi-axis} = \sqrt{dU^2 + dU_L^2} * T$$

where:

$$dU_L = \sqrt{da^2 + d\lambda_P^2 + dT_P^2} \ .$$

2. Process according to the preceding claim, **characterized in that** said images acquiring electronic device is a X-band radar (R).

3. Process according to any of preceding claims, **characterized in that** in the step H) the amplitude of the wave is approximated to $H_s/2$.

4. Process according to any of preceding claims, **characterized in that**, in windy conditions and in the case where the target (N) exposes outside of the sea surface a surface greater than that dipped surface so make a resistance to the wind, the wind generates a drift $\overline{U}_V = (U_{Vx}, U_{Vy})$ and the total superficial drift $\overline{U}_T = (U_{Tx}, U_{Ty})$ of the I) step is given by:

$$U_{Tx} = U_x + U_{Lx} + U_{Vx},$$

$$U_{Ty} = U_y + U_{Ly} + U_{Vy} \ .$$

5. Process according to the preceding claim, **characterized in that**, in windy conditions, the major semi-axis of the semi-ellipse of area of uncertainty (A) extends in the direction of the wind and is given by:

$$\text{major semi-axis} = \sqrt{dU^2 + dU_L^2 + dU_v^2} * T$$

where:

$dU_v$ is the error on the estimation of the wind intensity.

6. Process according to any of the preceding claims, **characterized in that** in case of non-uniform superficial current, in the step D) a vectorial field of superficial currents $\overline{U}_1 = (U_{x1}, U_{y1},), \overline{U}_2 = (U_{x2}, U_{y2},), \overline{U}_3 = (U_{x3}, U_{y3},),... \overline{U}_n = (U_{xn}, U_{yn},)$ is estimated, wherein the components of each superficial current are function of the space, and a superficial currents map is created.

## Patentansprüche

1. Verfahren zur Lokalisisierung von im Meer treibenden Zielen (N), umfassend die folgenden Schritte:

A) Erfassen einer zeitlichen Abfolge von Bildern der Meeresoberfläche durch eine elektronische Bilderfassungseinrichtung, die geeignet ausgebildet ist, um kontinuierlich Bilder von der Meeresoberfläche zu erfassen;
B) Anwenden einer dreidimensionalen Fourier-Transformation auf diese zeitliche Abfolge von Bildern, um ein Bildspektrum $F_1(k_x, k_y, \omega)$, zu erhalten, wobei:

k der Wellenzahlvektor ist und $k_x, k_y$ die Komponenten dieses Wellenzahlvektors sind, und $\omega$ die die Kreisfrequenz ist;

C) Filtern des Bildspektrums $F_1(k_x, k_y, \omega)$ mit einem Hochpass-Filter, um die in diesem Bildspektrum vorhandenen Niederfrequenzkomponenten zu löschen;
D) Schätzen einer Oberflächenströmung $\vec{U} = (U_x, U_y,)$ des Meeres und die Tiefe des Meeres im Bezug auf das Gebiet (P), das von der elektronischen Bilderfassungseinrichtung überstrichen worden ist;
E) Filtern des Bildspektrums $F_1(k_x, k_y, \omega)$ nach seiner Erstellung mit einem Bandpass-Filter, als eine Funktion der geschätzten Oberflächenströmung des Meeres und der Meerestiefe, um auf diese Weise ein gefiltertes Bildspektrum $\tilde{F}(k_x, k_y, \omega)$ zu erhalten, bei dem die ungewollten Komponenten des Spektrums, die durch die elektronische Bilderfassungseinheit erzeugt wurden, gelöscht wurden;
F) Anwenden der Modulationsübertragungsfunktion $|M(k)|^2$ auf das gefilterte Bildspektrum $\tilde{F}_1(k_x, k_y, \omega)$, um das Meeresspektrum $F_W(k_x, k_y, \omega)$ zu erhalten:

$$F_W(k_x, k_y, \omega) = \frac{\tilde{F}_I(k_x, k_y, \omega)}{|M(k)|^2}$$

wobei:

$|M(k)|^2 = k^\beta$, und
$\beta$ ein Koeffizient ist, der auf empirische Weise bestimmt wird;

G) Ausgehend von diesem Meeresspektrum $F_W(k_x, k_y, \omega)$, Schätzen der folgenden Parameter des Meereszustands, nämlich die signifikante Wellenhöhe $H_S$, die Periode $T_p$, die Wellenlänge $\lambda_p$ und die Richtung $\theta_p$ der vorherrschenden Wellen;
H) Schätzung einer Wellendrift $\vec{U}_L = (U_{Lx}, U_{Ly},)$, die mit der Anwesenheit von Wellen im Zusammenhang steht, ausgehend von Meeresparametern, die Richtung dieser Meeresdrift, die aus der Richtung $\theta_p$ der vorherrschen-den Wellen festgelegt ist, und die Intensität ergibt sich als:

$$u_L = ga^2k^2\cosh[2k(h+z)]/\omega\sinh(2kh)$$

wobei:

> $g$ die Erdbeschleunigung ist,
> $\omega$ die Kreisfrequenz der vorherrschenden Wellen gleich $2*\pi/T_p$ ist,
> $k$ die Wellenzahl der vorherrschenden Wellen gleich $2*\pi/\lambda_p$ ist,
> $a$ die Amplitude der Wellen ist,
> $h$ die Meerestiefe in Bezug auf die ungestörte freie Oberfläche ist, und
> $z$ die vertikale Koordinate ist (z=0 entspricht der ungestörten freien Oberfläche);

I) Berechnen der gesamten Oberflächendrift $\overline{U}_T = (U_{Tx}, U_{Ty})$, wobei die gesamte Oberflächendrift die Vektorsumme der geschätzten Oberflächenströmung $\vec{U}$ und der geschätzten Wellendrift $\vec{U}_L$ ist :

$$U_{Tx} = U_x + U_{Lx},$$

$$U_{Ty} = U_y + U_{Ly};$$

L) Bestimmen der vermuteten Position $\vec{P} = (P_x, P_y)$ der Ziele (N) im Meer in Bezug auf ein lokales Bezugssystem, d. h. in Bezug auf die Position der elektronischen Bilderfassungseinheit:

$$P_x = P_{x0} + U_{Tx}*T,$$

$$P_y = P_{y0} + U_{Ty}*T,$$

wobei:

> $P_{x0}$, $P_{y0}$ die jeweiligen Koordinaten entlang der X-Achse und der Y-Achse des Punktes, wo das Ziel (N) in das Meer gefallen ist oder wo der Schiffbruch staffgefunden hat, sind und
> $T$ die Interventionszeit oder die Zeit ist, die seit dem Fallen des Ziels (N) in das Meer oder seit dem Schiffbruch vergangen ist;

M) Transformieren der Koordinaten $P_x$ und $P_y$ der vermuteten Position $\vec{P}$ des Zieles (N) von einem lokalen Bezugssystem zu einem geographischen globalen Bezugssystem;
N) Bestimmen eines Unsicherheitsgebiebts (A) innerhalb dessen das Ziel (N) zu suchen ist als eine Funktion eines Fehlers $dU$ auf die Schätzung der Oberflächenströmung $\vec{U}$ und eines Fehlers $dU_L$ auf die Schätzung der Wellendrift $\vec{U}_L$, wobei dieses Unsicherheitsgebiet eine Form aufweist, die aus einem Halbkreis und einer Halbellipse zusammengesetzt ist, deren kleinere Achse mit dem Durchmesser des Halbkreises zusammenfällt und deren größere Halbachse in die gleiche Richtung $\theta_p$ und Orientierung wie die der vorherrschenden Wellen ausgerichtet ist, wobei die Halbachsen durch die folgenden Formeln definiert sind:

$$\text{kleinere Halbachse} = \sqrt{2}*dU*T,$$

$$\text{größere Halbachse} = \sqrt{dU^2 + dU_L^2} * T$$

wobei:

$$dU_L = \sqrt{da^2 + d\lambda_P^2 + dT_P^2}\ .$$

2. Verfahren nach dem vorangegangenen Anspruch, **dadurch gekennzeichnet, dass** die elektronische Bilderfassungseinrichtung ein X-Band-Radar (R) ist.

3. Verfahren nach einem der vorhergehenden Ansprüche, **dadurch gekennzeichnet, dass** in dem Schritt H) die Amplitude der Welle durch $H_s/2$ angenähert wird.

4. Verfahren nach einem der vorhergehenden Ansprüche, **dadurch gekennzeichnet, dass** bei windigigen Bedingungen und in dem Fall wo das Ziel (N) außerhalb der Meeresoberfläche eine größere Fläche als die eingetauchte Fläche freilegt, um so einen Widerstand für den Wind darzustellen, der Wind eine Drift $\vec{U}_y = (U_{Vx}, U_{Vy},)$ erzeugt und die gesamte Oberflächendrift $\vec{U}_T = (U_{Tx}, U_{Ty},)$ des I)-Schritts gegeben ist durch:

$$U_{Tx} = U_x + U_{Lx} + U_{Yx}\ ,$$

$$U_{Ty} = U_y + U_{Ly} + U_{Yy}\ .$$

5. Verfahren nach dem vorhergehenden Anspruch, **dadurch gekennzeichnet, dass** sich die größere Halbachse der Halbellipse des Unsicherheitsgebiets (A) bei windigen Bedingungen in die Richtung des Windes erstreckt und gegeben ist durch:

$$\text{größere Halbachse} = \sqrt{dU^2 + dU_L^2 + dU_V^2} * T$$

wobei:

$dU_V$ der Fehler auf die Schätzung der Windintensität ist.

6. Verfahren nach dem vorhergehenden Ansprüche, **dadurch gekennzeichnet, dass** im Falle einer nicht-gleichförmigen Oberflächenströmung, im Schritt D) ein Vektorfeld der Oberflächenströmung $\vec{U}_1 = (U_{x1}, U_{y1},)$, $\vec{U}_2 = (U_{x2}, U_{y2},)$, $\vec{U}_3 = (U_{x3}, U_{y3}, )$, ... $\vec{U}_n = (U_{xn}, U_{yn},)$ geschätzt wird, wobei die Komponenten jeder Oberflächenströmung Funktionen des Raumes sind und eine Oberflächenströmungenkarte erzeugt wird.

**Revendications**

1. Procédé pour la localisation d'une cible (N) dérivant dans la mer, comprenant les étapes suivantes :

A) l'acquisition d'une séquence temporelle d'images de la surface de la mer à l'aide d'un dispositif électronique d'acquisition d'images approprié pour acquérir de façon continue des images de la surface de la mer ;

B) l'application d'une transformée de Fourier en trois dimensions à ladite séquence temporelle d'images de façon à obtenir un spectre d'images $F_1(k_x, k_y, \omega)$, dans lequel :

k est le vecteur de nombre de vagues, et $k_x$, $k_y$ sont les composantes dudit vecteur de nombre de vagues, et

$\omega$ est la fréquence angulaire ;

C) le filtrage avec un filtre passe-haut du spectre d'images $F_1(k_x, k_y, \omega)$ de façon à supprimer les composantes basse fréquence présentes dans ledit spectre d'images ;

D) l'estimation d'un courant marin superficiel ($\overline{U} = (U_x, U_y)$ et de la profondeur de la mer vis-à-vis de la zone (P) balayée par ledit dispositif électronique d'acquisition d'images ;

E) le filtrage du spectre d'images $F_1(k_x, k_y, \omega)$ avec un filtre passe-bande, après sa construction en fonction du courant superficiel et de la profondeur de la mer estimés, de façon à obtenir un spectre d'images filtré $\tilde{F}_1(k_x, k_y, \omega)$ dans lequel les composantes de spectre indésirables induites par le dispositif électronique d'acquisition d'images ont été supprimées ;

F) l'application de la fonction de transfert de modulation $|(M(k)|^2$ au spectre d'images filtré $\tilde{F}_1(k_x, k_y, \omega)$ de façon à obtenir le spectre marin $F_W(k_x, k_y, \omega)$ :

$$F_W(k_x, k_y, \omega) = \frac{\tilde{F}_1(k_x, k_y, \omega)}{|M(k)|^2}$$

dans lequel :

$|M(k)|^2 = k^\beta$, et
$\beta$ est un coefficient qui est déterminé d'une manière empirique ;

G) à partir dudit spectre marin $F_W(k_x, k_y, \omega)$, l'estimation des paramètres suivants de l'état de la mer, à savoir la hauteur de vague significative $H_s$, la période $T_p$, la longueur d'onde $\lambda_p$ et la direction $\theta_p$ des vagues dominantes ;

H) l'estimation d'une dérive de vagues $\overline{U}_L = (U_{Lx}, U_{Ly})$ associée à la présence de vagues à partir de paramètres de la mer, la direction de ladite dérive de vagues étant établie à partir de la direction $\theta_p$ des vagues dominantes, et l'intensité étant :

$$u_L = ga^2 k^2 \cos h[2k(h+z)]/\omega \sin h(2kh)$$

dans laquelle :

$g$ est l'accélération de gravitation,
$\omega$ est la fréquence angulaire des vagues dominantes, égale à $2*\pi/T_p$, $k$ est le nombre de vagues des vagues dominantes, égal à $2*\pi/\lambda_p$,
$a$ est l'amplitude de la vague,
$h$ est la profondeur de la mer par rapport à la surface libre non perturbée, et
$z$ est la coordonnée verticale ($z = 0$ correspond à la surface libre non perturbée) ;

I) le calcul de la dérive superficielle totale $\overline{U}_T = (U_{Tx}, U_{Ty})$, ladite dérive superficielle totale étant la somme vectorielle du courant superficiel estimé $\overline{U}$ et de la dérive de vagues estimée $\overline{U}_L$ ;

$$U_{Tx} = U_x + U_{Lx},$$

$$U_{Ty} = U_y + U_{Ly} ;$$

L) la détermination de la position présumée $\overline{P} = (P_x, P_y)$ de la cible (N) dans la mer par rapport à un système de référence local, à savoir par rapport à la position du dispositif électronique d'acquisition d'images :

$$P_x = P_{x0} + U_{Tx}*T,$$

$$P_y = P_{y0} + U_{Ty}{*}T,$$

dans laquelle :

$P_{x0}$, $P_{y0}$ sont les coordonnées, respectivement le long de l'axe x et de l'axe y, du point où la cible (N) est tombée dans la mer, ou bien où le naufrage s'est produit, et

T est le temps d'intervention ou le temps qui s'est écoulé depuis la chute de la cible (N) dans la mer ou depuis le naufrage ;

M) la transformation des coordonnées $P_x$ et $P_y$ de la position présumée P de la cible (N) d'un système de référence local à un système de référence mondial géographique ;

N) la détermination d'une zone d'incertitude (A) à l'intérieur de laquelle il faut effectuer une recherche de la cible (N) en fonction d'une erreur $dU$ dans l'estimation du courant superficiel $\overline{U}$ et d'une erreur $dU_L$ dans l'estimation des dérives de vagues $\overline{U}_L$, ladite zone d'incertitude ayant une forme constituée par un semi-cercle et une semi-ellipse, dont l'axe secondaire coïncide avec le diamètre dudit semi-cercle et dont le semi-axe principal est orienté dans la même direction $\theta_p$ et la même orientation que les vagues dominantes, les semi-axes étant définis par les formules suivantes :

$$\text{semi-axe secondaire} = \sqrt{2} * dU * T,$$

$$\text{semi-axe principal} = \sqrt{dU^2 + dU_L{}^2} * T$$

dans lesquelles :

$$dU_L = \sqrt{da^2 + d\lambda_p{}^2 + dT_p{}^2} \ .$$

**2.** Procédé selon la revendication précédente, **caractérisé en ce que** ledit dispositif électronique d'acquisition d'images est un radar à bande X (R).

**3.** Procédé selon l'une quelconque des revendications précédentes, **caractérisé en ce que**, dans l'étape H), l'amplitude de la vague est d'approximativement $H_s/2$.

**4.** Procédé selon l'une quelconque des revendications précédentes, **caractérisé en ce que**, dans des conditions venteuses et dans le cas où la cible (N) expose à l'extérieur de la surface de la mer une surface supérieure à la surface immergée, de façon à établir une résistance au vent, le vent génère une dérive $\overline{U}_V = (U_{Vx}, U_{Vy})$ et la dérive superficielle totale $\overline{U}_T = (U_{Tx}, U_{Ty})$ de l'étape I) est donnée par :

$$U_{Tx} = U_x + U_{Lx} + U_{Vx},$$

$$U_{Ty} = U_y + U_{Ly} + U_{Vy}.$$

**5.** Procédé selon la revendication précédente, **caractérisé en ce que**, dans des conditions venteuses, le semi-axe principal de la semi-ellipse de la zone d'incertitude (A) s'étend dans la direction du vent, et est donné par :

$$\text{semi-axe principal} = \sqrt{dU^2 + dU_L{}^2 + dU_V{}^2} * T$$

où :

$dU_V$ est l'erreur dans l'estimation de l'intensité du vent.

6. Procédé selon l'une quelconque des revendications précédentes, **caractérisé en ce que**, dans le cas d'un courant superficiel non uniforme, dans l'étape D), un champ vectoriel de courants superficiels $\overline{U}_1 = (U_{x1}, U_{y1})$, $\overline{U}_2 = (U_{x2}, U_{y2})$, $\overline{U}_3 = (U_{x3}, U_{y3})$, ..., $\overline{U}_n = (U_{xn}, U_{yn})$ est estimé, dans lequel les composantes de chaque courant superficiel sont fonction de l'espace, et une carte des courants superficiels est créée.

*Fig.1*

★ Ship position

X Castaway position

*Fig.2*

Acquisition of sequence of images of sea surface

3D-FFT

~F₁

HP Filter

Estimation of superficial current and depth of sea

$U$

BP Filter

~$\widehat{F_1}$

MTF

~Fw

Estimation of sea parameters
$H_s$, $T_P$, $\delta_P$, $\theta_P$

Estimation of waves drift associated to the waves propagation

$U_L$

Calculation of total superficial drift

$U_T$

Determination of presumed position of a Target

Determination of an area of uncertainty within which to search for the Target

**Fig.3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- NO 8920624

- WO 2004097452 A

### Non-patent literature cited in the description

- **R. YOUNG ; W. ROSENTHAL ; F. ZIEMER.** Three-dimensional analysis of marine radar images for the determination of ocean wave directionality and surface currents. *J. Geophys. Res.,* 1985, vol. 90, 1049-1059
- Directional spectra from shipboard navigation radar during LEWEX. **F. ZIEMER ; W. ROSENTHAL.** Directional Ocean Wave Spectra: Measuring, Modeling, Predicting, and Applying. The Johns Hopkins University Press, 1991, 125-127
- Inversion of marine radar images for surface wave analysis. **J.C. NIETO BORGE ; R. G.RODRIGUEZ ; K. HESSNER ; I. P.GONZALES.** J. of Atmospheric and Oceanic technology. 2004, vol. 21, 1291-1300
- **J.C. NIETO BORGE ; C. GUEDES SOARES.** Analysis of directional wave fields using X-Band navigation radar. *Coastal Eng.,* 2000, vol. 40, 375-391
- **J.C. NIETO BORGE.** Analisis de Campos de Oleaje Mediante Radar de Navegacion en Banda X. *Ph.D. Thesis,* 1997

- **SERAFINO F. ; LUGNI C. ; SOLDOVIERI F.** A Novel Strategy for the Surface Current Determination from Marine X-Band Radar Data. *IEEE Geoscience and Remote Sensing Letters,* 2010, vol. 7, 232-236
- **RUNGALDIER, J.C. SHELTON ; A.B. WILLIAMS ; R. YEE ; H.C. YUEN.** X-Band Microwave Backscattering from Ocean Waves. *J. Geophys. Res.,* 1995, vol. 100, 2591-2611
- **W. J. PLANT ; W. C. KELLER.** Evidence of Bragg scattering in microwave Doppler spectra of sea return. *J. Geophys. Res.,* 1990, vol. 95, 16299-16310
- Electromagnetic scattering from the sea at low grazing angles. **L. B. WENZEL.** Surface Waves and Fluxes. Kluwer Academic, 1990, 41-108
- **R. G. DEAN.** Advanced Series on Ocean Engineering. *Water wave mechanics for engineers and scientists,* vol. 2
- **RB ABERNETHY ; RP BENEDICT ; R.B DOWDELL.** ASME Measurement Uncertainty. *J Fluids Eng,* 1985